# EUROPÄISCHE PATENTSCHRIFT

(11) **EP 1 557 580 B1**
(45) Veröffentlichungstag und Bekanntmachung des Hinweises auf die Patenterteilung: **04.01.2012**
(21) Anmeldenummer: 05000291.4
(22) Anmeldetag: 07.01.2005
(51) Int. Cl.: F16D 48/02, F16D 23/12

(54) **Verfahren zur Steuerung einer Kupplung oder eines Gangstellers eines Kraftfahrzeuges**
Method of controlling a clutch of a motor vehicle
Procedé de commande d'embrayage de véhicule automobile

(30) Priorität: 12.01.2004 DE 102004001753
(43) Veröffentlichungstag der Anmeldung: 27.07.2005
(73) Patentinhaber: Volkswagen Aktiengesellschaft, 38436 Wolfsburg (DE)
(72) Erfinder: Adomeit, Carsten, 30173 Hannover (DE); Damm, Ansgar, 38518 Gifhorn (DE); Kruse, Georg, 38518 Gifhorn (DE); Merk, Peter, 38446 Wolfsburg (DE); Nicke, Dirk, 38446 Wolfsburg (DE); Zergiebel, Axel, 38518 Gifhorn (DE)
(74) Vertreter: Hübsch, Dirk

(56) Entgegenhaltungen:
- EP-A- 0 933 564
- EP-A- 1 400 733
- DE-A1- 19 921 301
- FR-A- 2 784 948
- GB-A- 789 285
- GB-A- 2 213 550
- US-A- 3 351 170

## Beschreibung

Die Erfindung betrifft ein Verfahren zur Steuerung mindestens einer Kupplung oder eines Gangstellers eines Kraftfahrzeuges, insbesondere von einer Trockenkupplung, wobei mindestens ein Aktuator zur Betätigung der Kupplung oder zur Betätigung des Gangstellers angesteuert wird und wobei mit Hilfe eines Tanks ein Hydraulikmedium bereitgestellt wird, und wobei der Kupplungsdruck bzw. der Ganstellerdruck über den Verstellweg der Kupplung bzw. des Gangstellers variiert und der Tankdruck im wesentlichen konstant ist.

Im Stand der Technik, von dem die Erfindung ausgeht, sind zur Steuerung insbesondere von Trockenkupplungen entsprechende "Drucksteuerungen" bekannt. Beispielsweise sind in Kraftfahrzeugen zur Ansteuerung von Trockenkupplungen Druckregelventile bzw. Druckschaltventile im Einsatz. Druckregelventile halten den Druck unabhängig von der Größe eines höheren Vordruckes bzw. Versorgungsdruckes konstant, wobei Druckschaltventile beim Erreichen eines bestimmten Einstelldruckes einen Stromweg für einen weiteren Arbeitsablauf freigeben. Über die Druckregelventile bspw. können die Kräfte so eingestellt werden, dass das Einlegen eines Ganges im Getriebe möglichst schonend für die Synchronringe einer Schaltvorrichtung erfolgt. Des weiteren ist im Stand der Technik bekannt, dass der Druck von Druckregelventilen über eine Stellschraube mit Kontermutter oder alternativ über eine elektrische und/oder elektronische Ansteuerung individuell beeinflußbar ist.

Alternativ wird eine Wegregelung der Kupplungen eingesetzt, wobei der Aktuator in der Regel um einen definierten Betrag bewegt wird und sich damit - bei entsprechendend steifen Bauteilen - eine relativ gut reproduzierbare Änderung der Kupplungskapazität einstellt. Die Durchflussventile regeln über eine Drosselwirkung die Bewegungsgeschwindigkeit des Strömungsmediums / Hydraulikmediums innerhalb des Hydraulikkreises und ermöglichen dadurch ein Schalten der Kupplungen.

Im Stand der Technik, von dem die Erfindung ausgeht, sind entsprechende Verfahren zur Steuerung von Trockenkupplungen mittels Drucksteuerungen oder Durchflussventilen bekannt. Hierzu wird bei den Durchflussventilen- wie schon erwähnt - eine Wegregelung der Kupplungen eingesetzt, wobei der Aktuator in der Regel um einen definierten Betrag bewegt wird und sich damit - bei entsprechend steifen Bauteilen - eine relative Änderung der Kupplungskapazität einstellt. Die verwendeten Durchflussventile regeln über eine Drosselwirkung das durchfließende Volumen des Strömungsmediums innerhalb des Hydraulikkreises.

Die Ausbildung dieser im Stand der Technik bekannten Ventilsysteme zur Steuerungen von Kupplungen, insbesondere von Trockenkupplungen ist noch nicht optimal. Die verwendeten Druckregelventile weisen eine große Krafthysterese auf. Durch Reibungseinflüsse aus Kupplungs- und Stellsystem besteht eine nicht zu vernachlässigende Differenz zwischen dem Schließ- und dem Öffnungsdruck in ein- und derselben Kupplungsposition, so dass eine feinfühlige Verstellung erschwert ist. Weiterhin nachteilig beim Einsatz von Druckregelventilen sind die variierenden existierenden Reibungskräfte an den Kupplungsscheiben, welche auch noch abhängig sind von der individuellen aktuellen Betriebssituation der Kupplung und in der Regel nicht schnell genug kompensiert werden können. Diese erhöhen den Einfluss auf den Verschleiß und damit wird die Lebensdauer einer Kupplung verkürzt sowie die Kosten für die Wartung erhöht. Der Nachteil bei den verwendeten Durchflussventilen ist, dass sich unterschiedliche Differenzdrücke bzw. Druckgefälle über dem Durchflussventil einstellen und dadurch der fließende Volumenstrom in Schließ- und Öffnungsrichtung unterschiedlich ist, was erneut eine Problematik hinsichtlich der Regelbarkeit mit sich zieht und wiederum negativen Einfluß auf den Verschleiß, die Lebensdauer sowie einhergehenden Kosten der Kupplung sowie des Getriebes des Kraftfahrzeuges verursacht.

Die bekannten Verfahren zur Steuerung von Trockenkupplungen, insbesondere für Trockenkupplungen eines Kraftfahrzeuges, mit mindestens einem Aktuator zur Betätigung der Kupplung und mit mindestens einem Tank zur Bereitstellung eines Hydraulikmediums haben ähnliche Nachteile. Die an den Ventilen anliegenden Differenzdrücke in Schließ- und Öffnungsrichtung der Kupplung sind stark unterschiedlich und üben dadurch negativen Einfluss auf die Regelbarkeit des Ventilsystems aus. Ebenso haben die im Stand der Technik bekannten Verfahren einen erheblichen Einfluss auf die Lebensdauer eines Getriebes aufgrund der unter Umständen dann auch stark beanspruchten Synchronringe eines Getriebes, bspw. durch die entsprechende Betätigung der Gangsteller. Zusätzlich ist durch die nicht vorhandene optimale Regelung der Verschleiß von Kupplungen bzw. Synchronringen vergrößert und dadurch deren Lebensdauer verringert bzw. deren Kosten erhöht.

EP 0 933 564 A2 offenbart ein Verfahren nach dem Oberbegriff des Anspruchs 1.

Der Erfindung liegt daher die Aufgabe zugrunde, dass das bekannte Verfahren zur Steuerung von Kupplungen oder von Gangstellern derart auszugestalten und weiterzubilden, dass Steuer- und / oder Regelprobleme, insbesondere hervorgerufen durch Krafthysteresen in nahezu jeder Betriebssituation vermieden werden, um einen Verschleiß der Kupplung sowie des Getriebes, insbesondere auch der Synchronringe zu verringern und dadurch deren Lebensdauer zu verlängern sowie nachfolgende Wartungskosten zu senken.

Die Aufgabe für das Verfahren wird durch die Merkmale des Anspruchs 1 gelöst.

Durch die Reihenschaltung mindestens eines Druckregelventils und mindestens eines Durchflussventils ist ein beliebiger und stufenloser Wechsel, je nach den momentanen Erfordernissen der Betriebsweise der "Gesamtkette" zwischen Druckregelventil und Durchflussventil möglich. Die so vorgesehene Zusammenstellung in Reihenschaltung beeinflußt die jeweiligen Größen "Druck" anhand des Druckregelventils und den "Volumenstrom" mit dem Durchflussventil in der jeweiligen aktuellen Kupplungssituation bzw. Kupplungsposition. Über das Ausbalancieren der Druckniveaus hinaus, sind situationsangepasste Einstellungen von Druckregelventil und Durchflussregelventil für explizite Betriebszustände der Kupplung bzw. des Ganstellers gegeben. Beispielsweise kann einerseits eine feinfühlige Verstellung des Aktuators mit geringen Druckdifferenzen und gedrosseltem Strömungsquerschnitt im Rahmen einer Mikroschlupfregelung eingestellt werden. Andererseits kann die Zustellbewegung der Kupplung oder des Gangstellers aber auch durch Anhebung des geregelten Drucks und zusätzlicher weiter Öffnung der Strömungsquerschnitte im Durchflussventil beschleunigt erfolgen, um schnell eine Änderung des an der Kupplung übertragbaren Momentes zu erreichen. Durch die Kombination von einem Druckregelventil mit einem Durchflussventil wird nicht nur bei Betätigung die Kupplung stufenlos angefahren und der Eingriffspunkt optimal getroffen, sondern auch der Schaltpunkt vorgegeben. Durch die Angleichung der Druckdifferenz hinsichtlich Schließ- und Öffnungsdruck aufgrund der Kombination von Druckregelventil und Durchflussventil ist ein optimales Steuerungsverhalten gewährleistet. Dadurch werden die Schaltvorgänge schonend und stufenlos ermöglicht mit verringertem Verschleiß und damit einhergehender höherer Lebensdauer der Komponenten. Hierdurch wird der Schaltkomfort verbessert und der Verschleiß der Kupplung und des Getriebes verringert bzw. deren Lebensdauer erhöht und folglich die Kosten gemindert. Dadurch sind die eingangs genannten Nachteile vermieden.

Es gibt nun unterschiedliche Möglichkeiten die Erfindung in vorteilhafter Art und Weise auszugestalten und weiterzubilden. Im folgenden soll jedoch eine bevorzugte Ausführungsform der Erfindung anhand der folgenden Zeichnung und der dazugehörigen Beschreibung näher erläutert werden. In der Zeichnung zeigt:
- Fig. 1: eine schematische Darstellung eines Ventilsystems zur Steuerung von Kupplungen oder Gangstellern eines Kraftfahrzeuges,
- Fig. 2: eine schematische Darstellung der anliegenden Differenzdrücke bei der Schließ- und Öffnungsrichtung eines Durchflussventils für eine Kupplung, in schematischer Darstellung, wie bereits bekannt, und
- Fig. 3: eine schematische Darstellung der anliegenden Differenzdrücke bei der Schließ- und Öffnungsrichtung eines Durchflussventil mit Druckvorsteuerung bzw. Nachführung mit Hilfe eines Druckregelventils gemäß dem erfindungsgemäßen Verfahren.

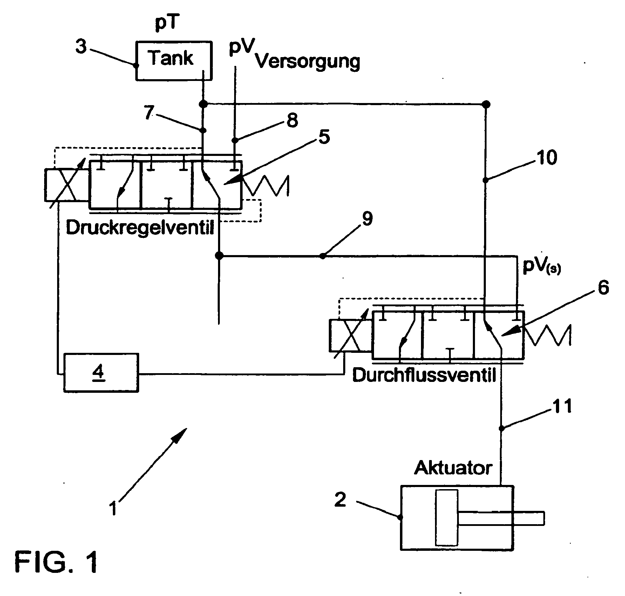

In Fig. 1 ist ein Ventilsystem 1 zur Steuerung einer nicht dargestellten Kupplung, insbesondere von Trockenkupplungen eines Kraftfahrzeuges oder zur Steuerung eines nicht dargestellten Gangstellers eines Getriebes gezeigt. Das Ventilsystem 1 weist mindestens einen Aktuator 2 zur Ansteuerung der Kupplung bzw. des Gangstellers und einen Tank 3 zur Bereitstellung eines Hydraulikmediums auf.

Die eingangs genannten Nachteile sind nun dadurch vermieden, dass mindestens ein Druckregelventil 5 und mindestens ein Durchflussventil 6 in Reihenschaltung vor dem Aktuator 2 angeordnet sind.

Zusätzlich ist eine Steuervorrichtung 4 mit mindestens einer steuertechnischen Verbindung zum Druckregelventil 5 und mindestens einer steuertechnischen Verbindung zum Durchflussventil 6 vorgesehen. Die Steuervorrichtung 4 ist zur Auswertung verschiedener Parameter ausgebildet. Eine Vielzahl von Parametern sind zur idealen Schaltung von Trockenkupplungen bzw. Gangstellern ermittelbar, vorzugsweise verarbeitet die Steuervorrichtung 4 die Motordrehzahl, die Getriebeübersetzung, die Fahrpedalstellung, das Motormoment, die Aktivitäten der Bremse, die Getriebetemperaturen, die Drücke bzw. Druckdifferenzen etc.. Über entsprechende Sensoren werden der Steuervorrichtung 4 die einzelnen Parameterwerte zugeleitet.

Wie Fig. 1 zeigt, weist das Druckregelventil 5 mindestens eine erste Entlastungsleitung 7 zum Tank 3 und, um immer einen entsprechenden Versorgungsdruck pV zur Verfügung zu haben, eine erste Druckleitung 8 zur Druckversorgung auf. Es ist eine weitere Verbindung zum Durchflussventil 6 durch eine zweite Druckleitung 9 vorgesehen. Durch eine Verbindung des Druckregelventils 5 mit dem Durchflussventil 6 ist immer der optimierte benötigte aktuelle Druck am Durchflussventil 6 für den jeweiligen situationsbedingten Schaltvorgang gewährleistet bzw. insbesondere durch die Steuervorrichtung 4 einstellbar.

Das Durchflussventil 6 ist über die zweite Druckleitung 9 mit dem Druckregelventil 5 verbunden. Weiterhin ist eine zweite Entlastungsleistung 10 zum Tank 3 vorgesehen und eine dritte Druckleitung 11 zum Aktuator 2. Der Aktuator 2 betätigt direkt und / oder indirekt die Kupplung oder einen Gangsteller des Kraftfahrzeuges, vorzugsweise über die entsprechende Verschiebung des hier in der Fig. 1 im Aktuator 2 dargestellten Kolbens.

Das Druckregelventil 5 ist in Reihenschaltung vor dem Durchflussventil 6 angeordnet. Denkbar ist aber auch eine Anordnung des Durchflussventils 6 in Reihenschaltung vor dem Druckregelventil 5. Entscheidend ist die Kombination von beiden Ventilcharakteristika in Reihenschaltung bzw. auch unter Berücksichtigung der Steuervorrichtung 4 zur idealen Abstimmung. Aufgrund dieser Tatsache kann das Druckregelventil 5 an der zweiten Druckleitung 9 des Durchflussventils 6 einen der Betriebssituation angepassten aktuellen Versorgungsdruck pV_{(S)} bereitstellen und somit den Schaltvorgang bzw. die Ansteuerung des Aktuators 2 optimieren.

In der hier dargestellten besonderen Ausführungsform stellt das Druckregelventil 5 in der zum Durchflussventil 6 führenden zweiten Druckleitung 9 einen der jeweiligen Betriebssituation angepassten spezifischen Versorgungsdruck pV_{(S)} bereit. Das Druckregelventil 5 steuert und / oder regelt den in der zweiten Druckleitung 9 vorhandenen Versorgungsdruck pV_{(S)} derart, dass dieser aktuell am Durchflussventil 6 anliegende Versorgungsdruck pV_{(S)} in Abhängigkeit des sich über den Verstellweg s ändernden Kupplungsdruckes pK_{(S)} bzw. ändernden Gangstellerdruckes eingestellt wird. Das Druckregelventil 5 weist vzw. eine Blende auf, über die der in der zweiten Druckleitung 9 anliegende Versorgungsdruck pV_{(S)} entsprechend einstellbar ist. Vorzugsweise wird nun der am Durchflussventil 6 anliegende Versorgungsdruck pV_{(S)} derart eingestellt, dass der Quotient aus den Differenzdrücken, nämlich aus der Differenz des aktuellen Versorgungsdruckes pV₍ₛ₎ und des aktuellen Kupplungsdruckes pK_{(S)} und aus der Differenz des aktuellen Kupplungsdruckes pK_{(S)} bzw. dem Gangstellerdruck und dem Tankdruck pT im wesentlichen über den Verstellweg s nahezu konstant ist. Dies soll anhand der Erläuterung des erfindungsgemäßen Verfahrens noch näher beschrieben werden.

Die Fig. 1 zeigt - wie bereits erwähnt - das Ventilsystem 1. Mit Hilfe dieses Ventilsystems 1 können nun entsprechende Kupplungen eines Kraftfahrzeuges angesteuert werden. Es ist aber auch möglich, mit dem hier dargestellten Ventilsystem 1 einen entsprechenden Gangsteller eines Getriebes eines Kraftfahrzeuges entsprechend anzusteuern. Dies ist abhängig vom jeweiligen Anwendungsfall. Entscheidend ist, dass mit Hilfe des hier dargestellten Aktuators 2, der mit dem Ventilsystem 1 angesteuert bzw. betätigt wird, entsprechende Kupplungen oder Gangsteller dann betätigt werden können.

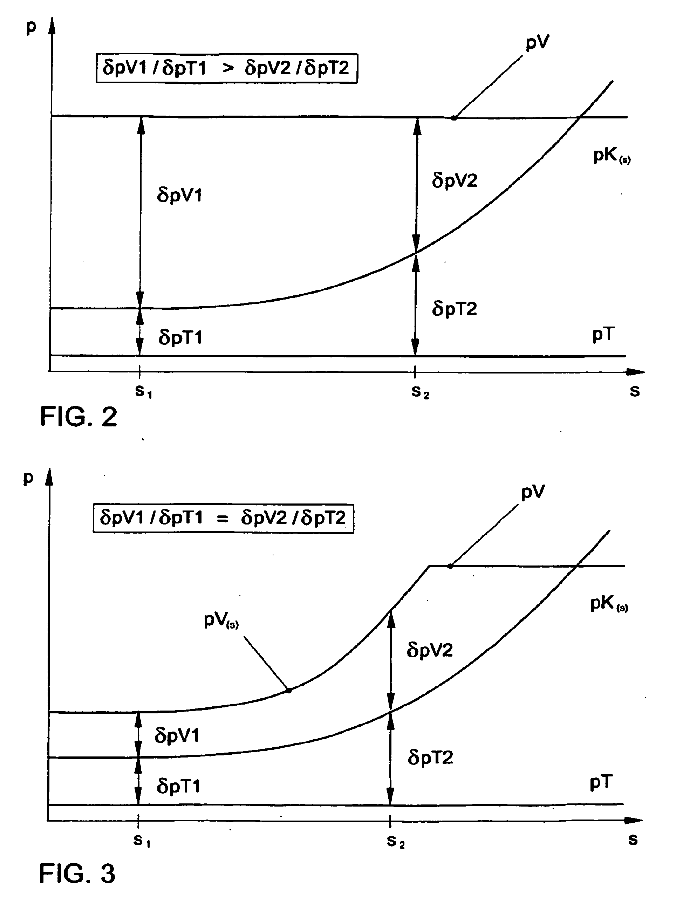

Im folgenden soll das erfindungsgemäße Verfahren nun näher erläutert werden, allerdings "nur" anhand der Ansteuerung einer Kupplung. Die in den Fig. 2 und 3 dargestellten Kurven/Graphen gelten grundsätzlich auch für die Ansteuerung eines Gangstellers, wobei hier dann nicht der Kupplungsdruck pK_{(S)}, sondern eben der Gangstellerdruck dargestellt sein müsste. Mit den Bezeichnungen "Kupplungsdruck" bzw. "Gangstellerdruck" kann auch die entsprechend in der Kupplung bzw. im Gangsteller, vzw. auf den Aktuator 2 jeweilige wirkende Kraft gemeint sein, die über den Kolben des Aktuators 2 wirkt.

In den Fig. 2 und 3 sind dargestellt der Versorgungsdruck pV, der Kupplungsdruck pK_{(S)}, der Tankdruck pT und der spezifisch eingestellte Versorgungsdruck pV_{(S)}. Es ist deutlich zu erkennen, dass sich insbesondere der Kupplungsdruck pK_{(S)} in Abhängigkeit des Verstellweges s entsprechend ändert. Wie Fig. 2 zeigt, ist hier der Versorgungsdruck pV im wesentlichen konstant. Gleiches gilt für den Tankdruck pT. Dies ist im Vergleich zu Fig. 3 unterschiedlich, was im folgenden noch ausgeführt wird.

In Fig. 2 sind - wie im Stand der Technik bekannt - die auftretenden Differenzdrücke hinsichtlich der Schließ- und Öffnungsrichtung eines Durchflussventils 6 schematisch, ohne dass ein Druckregelventil 5 in Reihe geschaltet ist, dargestellt. Deutlich erkennbar sind die unterschiedlichen Differenzdrücke zwischen den jeweiligen Schaltvorgängen. Hierin sind bspw. die sich einstellenden Druckdifferenzen δpV1, δpT1, δpV2 und δpT2 durch Pfeile gekennzeichnet. Es ist deutlich erkennbar, dass der Quotient aus den Differenzdrücken, nämlich δpV1 / δpT1 > δpV2 / δpT2, also die Quotienten aus den Differenzdrücken entsprechend unterschiedlich sind.

### Fig. 3 zeigt nun die Steuerung gemäß dem erfindungsgemäßen Verfahren:

In Fig. 3 sind die Differenzdrücke in Schließ- und Öffnungsrichtung des Durchflussventil 6 mit Druckvorsteuerung bzw. Nachführung mit Hilfe des Druckregelventils 5 schematisch dargestellt. Hierin sind die sich einstellenden Differenzdrücke δpV1, δpT1, δpV2, δpT2 auch durch entsprechende Pfeile für unterschiedliche Verstellpunkte S₁ und S₂ gekennzeichnet.

Die eingangs genannten Nachteile sind nun dadurch vermieden, dass die bisherigen Differenzdrücke des Schließ- und Öffnungsdruckes δpV1 / δpT1 > δpV2 /δpT2 in den jeweiligen Kupplungspositionen durch eine Druckvorsteuerung mittels mindestens eines Druckregelventils 5 in Kombination mit mindestens einem Durchflussventil 6 nun optimal ausbalanciert werden.

Die Steuervorrichtung 4 kann die aktuell anstehenden Differenzdrücke auswerten und diese durch Steuerung/Regelung entsprechend den Betriebszuständen anpassen, wobei die Differenzdrücke - wie in Fig. 3 gezeigt - angeglichen werden zu δpV1 / δpT1 = δpV2 / δpT2, also die Quotienten der Differenzdrücke im wesentlichen konstant sind. Hierzu steuert und regelt die Steuervorrichtung 4 das Druckregelventil 5 und das Durchflussventil 6. Zusätzliche Parameter wie die Motordrehzahl, die Getriebeeingangsstellung, die Fahrpedalstellung, das Motormoment, die Aktivitäten der Bremse, die Getriebetemperaturen und andere Parameter können durch die Steuervorrichtung 4 berücksichtigt und verarbeitet werden. Die Steuervorrichtung 4 ist vzw. als elektrische/elektronische Steuervorrichtung 4 ausgebildet, weist vzw. einen entsprechenden Mikroprozessor auf. Die Steuervorrichtung 4 ist in der Lage, den in der dritten Druckleitung 11 vorhandenen aktuellen Kupplungsdruck pK(s) zu messen bzw. mit Hilfe des Druckregelventils 5 und des Durchflussventils 6, die beide vzw. entsprechende Blenden aufweisen, entsprechend einzustellen. Weiterhin ist der Volumenstrom durch das Durchflussventil 6 durch die Steuervorrichtung 4 entsprechend beeinflussbar. Denkbar ist auch eine entsprechende Änderung des Volumenstroms durch die Ansteuerung des Durchflussventils 6 durch die Steuervorrichtung 4, um entsprechende Druckdifferenzen optimal abzugleichen.

Bei dem erfindungsgemäßen Verfahren zur Steuerung mindestens einer Kupplung oder eines Gangstellers eines Kraftfahrzeuges, vzw. für das in Fig. 1 dargestellte Ventilsystems 1, wird nun der Aktuator 2 entsprechend angesteuert, um die Kupplung oder den Gangsteller zu betätigen. Hierbei wird mit Hilfe eines Tankes 3 ein Hydraulikmedium bereit gestellt, wobei der Kupplungsdruck pK_{(S)} über den Verstellweg s der Kupplung bzw. der Gangstellerdruck variiert und der Tankdruck pT im wesentlichen konstant ist, so wie in den Fig. 2 und 3 gezeigt. Durch die Kombination des Druckregelventiles 5 und des Durchflussventiles 6, die in Reihe geschaltet sind, kann das Druckregelventil 5 und/oder das Durchflussventil 6 nun derart gesteuert werden, dass der aktuell an Durchflussventil 6 anliegende Versorgungsdruck pV_{(S)}, der vzw. in der zweiten Druckleitung 9 besteht, in Abhängigkeit des sich über den Verstellweg s ändernden Kupplungsdruckes pK_{(S)} bzw. des Gangstellerdruckes eingestellt wird. Dieser Unterschied ist aus dem Vergleich der Fig. 2 und der Fig. 3 deutlich ersichtlich, da Fig. 2 das nicht angewendete erfindungsgemäße Verfahren und Fig. 3 das angewendete erfindungsgemäße Verfahren zeigt.

Wie die Fig. 3 gut zu erkennen lässt, wird nun der aktuelle am Durchflussventil 6 anliegende Versorgungsdruck pV_{(S)} derart eingestellt, dass der Quotient (δpV1 / δpT1 = δpV2 / δpT2), nämlich der Quotient aus den jeweiligen Differenzdrücken, nämlich der Differenz des aktuellen Versorgungsdruckes pV_{(S)} und des aktuellen Kupplungsdruckes pK_{(S)} und der Differenz aus dem aktuellen Kupplungsdruck pK_{(S)} und dem aktuellen Tankdruck pT im wesentlichen über den Verstellweg s nahezu konstant ist. Dadurch werden die eingangs beschriebenen Nachteile vermieden.

Zusätzlich ist eine "Sicherheitsfunktion" realisiert. Für den Störfall, dass das Durchflussventil 6 nicht mehr ansteuerbar ist und in einer die zweite Druckleitung 9 mit der dritten Druckleitung 11 verbindenden Stellung steht, bspw. durch eine Verschmutzung oder bspw. durch eine nicht beabsichtigte Dauerbestromung aufgrund eines elektrischen Fehlers, wird dann mit Hilfe Druckregelventils 5 der spezifische Versorgungsdruck pV_{(S)} abgebaut. Dies hat den Vorteil, dass der Aktuator 2 entlastet werden kann, ohne das der Hauptdruck bzw. Versorgungsdruck pV abgeschaltet werden muss. Durch diese "Sicherheitsfunktion" kann nun der spezifische Versorgungsdruck pV_{(S)} teilweise abgesenkt oder vollständig abgesenkt werden, ohne dass der Versorgungsdruck pV modifiziert werden muss. Bei aktiv schließenden Kupplungen kann das System so in den sicheren Zustand "Kupplung offen" überführt werden, ohne andere Teilfunktionen zu beeinträchtigen. Darüber hinaus könnte das System bei entsprechender Auslegung der Kupplungskraftkennlinie (bspw.: monoton steigend) als reine Drucksteuerung gefahren werden. Speziell bei Systemen mit nur einer Kupplung würde dies einen Notfahrbetrieb ermöglichen.

### Bezugszeichenliste:

- 1: Ventilsystem
- 2: Aktuator
- 3: Tank
- 4: Steuervorrichtung
- 5: Druckregelventil
- 6: Durchflussventil
- 7: erste Entlastungsleitung
- 8: erste Druckleitung
- 9: zweite Druckleitung
- 10: zweite Entlastungsleitung
- 11: dritte Druckleitung
- pV_{(S)}: spezifischer Versorgungsdruck
- pK_{(S)}: Kupplungsdruck in Abhängigkeit des Verstellweges
- pT: Tankdruck
- pV: Versorgungsdruck
- s: Verstellweg

## Patentansprüche

1. Verfahren zur Steuerung mindestens einer Kupplung oder eines Gangstellers eines Kraftfahrzeuges, insbesondere von einer Trockenkupplung, vzw. für ein Ventilsystem, wobei mindestens ein Aktuator (2) zur Betätigung der Kupplung oder zur Betätigung des Gangstellers angesteuert wird, und wobei mit Hilfe eines Tankes (3) ein Hydraulikmedium bereitgestellt wird, und wobei der Kupplungsdruck (pK(S)) bzw. der Gangstellerdruck über den Verstellweg (s) der Kupplung bzw. des Gangstellers variiert und der Tankdruck (pT) im wesentlichen konstant ist, wobei durch Kombination mindestens eines Druckregelventile (5) und mindestens eines Durchflussventils (6) in Reihenschaltung das Druckregelventil (5) und/oder das Dumhflussventil (6) derart gesteuert werden, dass der aktuell am Durchflussventil (6) anliegende Versorgungsdruck (pV(S)) in Abhängigkeit des sich über den Verstellweg (s) ändernden Kupplungsdruckes (pK(s), bzw. des Gangstellerdruckes eingestellt wird, wobei eine Steuervorrichtung (4) zur Regelung und/oder Steuerung des Druckregelventils (5) und des Durchflussventils (6) vorgesehen ist und die Steuervorrichtung (4) verschiedene Parameter des Hydraulikkreislaufes auswertet, und wobei die Steuervorrichtung (4) das Druckregelventil (5) und das Durchflussventil (6) ansteuert, **dadurch gekennzeichnet, dass** das Druckregelventil (5) derart gesteuert wird, dass in der zwichen dem Druckregelventil (5) und dem Durchflussventil (6) liegenden zweiten Druckleitung (a) ein der Betriebssituation angepasster aktueller Versorgungsdruck (pV(S)) bereitstellt wird, nämlich dass der aktuell am Durchflussventil (6) anliegende Versorgungsdruck (pV(S)) derart eingestellt wird, dass der Quotient (δpV1 / δpT1 bzw. δpV2 / δpT2) aus den Differenzdrücken, nämlich aus der Differenz aus dem aktuellen Versorgungsdruck (pV(S)) und dem aktuellen Kupplungsdruckes (pK(S)) bzw. Gangstellerdruck und aus der Differenz aus dem aktuellen Kupplungsdruck (pK(S)) bzw. Gangstellerdruck und dem Tankdruck (pT) im wesentlichen über den Verstellweg (s) der Kupplung bzw. des Gangstellers konstant ist.

## Claims

1. Method for the control of at least one clutch or one gear actuator of a motor vehicle, in particular of a dry clutch, preferably for a valve system, wherein at least one actuator (2) is activated so as to actuate the clutch or to actuate the gear actuator, and wherein a hydraulic medium is provided by means of a tank (3), and wherein the clutch pressure (pK(s)) or the gear actuator pressure is varied over the adjustment travel (s) of the clutch or of the gear actuator and the tank pressure (pT) is substantially constant, wherein by means of a combination of at least one pressure regulating valve (5) and at least one throughflow valve (6) in a series configuration, the pressure regulating valve (5) and/or the throughflow valve (6) are controlled such that the supply pressure (pV(s)) presently prevailing at the throughflow valve (6) is set as a function of the clutch pressure (pK(s)) or gear actuator pressure which varies over the adjustment travel (S), wherein a control device (4) is provided for regulating and/or controlling the pressure regulating valve (5) and the throughflow valve (6) and the control device (4) evaluates various parameters of the hydraulic circuit, and wherein the control device (4) activates the pressure regulating valve (5) and the throughflow valve (6), **characterized in that** the pressure regulating valve (5) is controlled such that, in the second pressure line (9) situated between the pressure regulating valve (5) and the throughflow valve (6), a present supply pressure (pV(s)) is provided which is adapted to the operating situation, specifically **in that** the supply pressure (pV(s)) presently prevailing at the throughflow valve (6) is set such that the quotient (δpV1 / δpT1 or δpV2 / δpT2) of the pressure differences, specifically of the difference between the present supply pressure (pV(s)) and the present clutch pressure (pK(s)) or gear actuator pressure and of the difference between the present clutch pressure (pK(s)) or gear actuator pressure and the tank pressure (pT), is substantially constant over the adjustment travel (s) of the clutch or of the gear actuator.

## Revendications

1. Procédé de commande d'au moins un accouplement ou un sélecteur de vitesse d'un véhicule automobile, notamment d'un accouplement à sec, par exemple pour un système de vannes, au moins un actionneur (2) étant commandé pour actionner l'accouplement ou pour actionner le sélecteur de vitesse et un fluide hydraulique étant mis à disposition à l'aide d'un réservoir (3), et la pression de l'accouplement (pK(S)) ou la pression du sélecteur de vitesse variant sur la course de positionnement (s) de l'accouplement ou du sélecteur de vitesse et la pression du réservoir (pT) étant pour l'essentiel constante, la vanne de régulation de pression (5) et/ou la vanne de débit (6) étant commandées par la combinaison d'au moins une vanne de régulation de pression (5) et d'au moins une vanne de débit (6) branchées en série de telle sorte que la pression d'alimentation (pV(S)) actuelle présente au niveau de la vanne de débit (6) est réglée en fonction de la pression de l'accouplement (pK(S)) ou de la pression du sélecteur de vitesse qui varie en fonction de la course de positionnement (s), un dispositif de commande (4) étant prévu pour réguler et/ou commander la vanne de régulation de pression (5) et la vanne de débit (6) et le dispositif de commande (4) interprétant différents paramètres du circuit hydraulique, et le dispositif de commande (4) commandant la vanne de régulation de pression (5) et la vanne de débit (6), **caractérisé en ce que** la vanne de régulation de pression (5) est commandée de telle sorte qu'une pression d'alimentation (pV(S)) actuelle adaptée à la situation opérationnelle est mise à disposition dans la deuxième conduite de pression (9) qui se trouve entre la vanne de régulation de pression (5) et la vanne de débit (6), à savoir que la pression d'alimentation (pV(S)) actuellement appliquée à la vanne de débit (6) est réglée de telle sorte que le quotient (δpV1 / δpT1 ou δpV2 / δpT2) des pressions différentielles, à savoir de la différence entre la pression d'alimentation actuelle (pV(S)) et la pression actuelle de l'accouplement (pK(S)) ou du sélecteur de vitesse et de la différence entre la pression actuelle de l'accouplement (pK(S)) ou du sélecteur de vitesse et la pression du réservoir (pT), est pour l'essentiel constant sur la course de positionnement (s) de l'accouplement ou du sélecteur de vitesse.
